# EUROPEAN PATENT APPLICATION

(11) **EP 3 995 640 A1**
(43) Date of publication of application: **11.05.2022**
(21) Application number: 19936074.4
(22) Date of filing: 27.11.2019
(51) Int. Cl.: E04B 1/80, E04B 1/94, C08J 9/06, C08J 9/08, C08J 9/10, C08L 23/06, C08L 23/08, C08K 5/14

(54) **FLAME RETARDANT INSULATION MODULE**

(30) Priority: 03.07.2019 KR 20190080354
(71) Applicant: Ilsin Industrial Co., Ltd., Gyeongsan-si, Gyeongsangbuk-do 38577 (KR)
(72) Inventor: SONG, Jeong Gon, Gyeongsan-si, Gyeongsangbuk-do 38571 (KR); KIM, Kyung Min, Gyeongsan-si, Gyeongsangbuk-do 38613 (KR)
(74) Representative: Ter Meer Steinmeister & Partner
(86) International application number: PCT/KR2019/016411
(87) International publication number: WO 2021/002544

(57) **Abstract**

A flame retardant insulation module according to one embodiment of the present invention comprises: an air layer-forming part including a first air layer-forming part and a second air layer-forming part disposed below the first air layer-forming part, which are disposed so that at least a portion of one does not overlap with a portion of the other; a lower end cover part that covers the lower end of the second air layer-forming part to separate the lower end from an external space; and an intermediate separation part for separating a first air layer and a second air layer. As such, heat insulation performance can be maximized, such that the insulation module has flame retardancy even when a fire occurs.

## Description

### [Technical Field]

The present invention relates to a flame retardant insulation module, and more particularly, to an insulation module having a heat insulating performance through an air layer and having flame retardancy so that the insulation module is not easily burned even when a fire occurs.

### [Background Art]

In general, among widely used building insulation materials, representative insulation materials that target only heat transfer by heat conduction include foam insulation materials made of various organic materials such as polystyrene foam, polyethylene foam, polypropylene foam, polyurethane foam, and rubber foam, organic fiber-based non-woven or felt-type insulation materials using polyethylene terephthalate, polypropylene fiber, or the like, and inorganic fiber-based non-woven or felt-type insulation materials based on inorganic fiber such as glass wool, rock wool, and glass long fiber. These existing building insulation materials have low thermal conductivity due to structural characteristics thereof and exhibit more excellent insulation properties as the thickness thereof becomes greater. Thus, these building insulation materials are sometimes classified into a term called a volume insulation material.

Meanwhile, Korean Patent Registration No. 10-1558953 (registered on October 2, 2015), which is a prior registered patent of the present applicant, discloses a reflective-type insulation material having improved insulation properties.

In the insulating material known in the registered patent, upper and lower surface films (20)(22) made of aluminum having a low surface emissivity are formed on upper and lower sides of a multilayer volume insulation materials (16)(18) having internal air layers (12)(14), and an internal film made of aluminum having a low surface emissivity is also formed and then inserted between the upper and lower volume insulation materials (16)(18).

However, when a fire occurs, the upper and lower surface films (20)(22) are easily broken due to high temperature and high pressure, the upper and lower volume insulation materials (16)(18) are directly exposed to fire, and thus flame retardancy is low.

### [Disclosure]

### [Technical Problem]

The present invention is directed to providing an insulation module having improved flame retardancy while maximizing insulation performance.

The problem to be solved by the present invention is not limited to the above-described problems, and problems that are not described will be clearly understood by those skilled in the art to which the present invention pertains from the present specification and the accompanying drawings.

### [Technical Solution]

One aspect of the present invention provides a flame retardant insulation module including an air layer forming part that includes a first air layer forming part that forms a first air layer and a second air layer forming part that is disposed below the first air layer forming part and forms a second air layer, an upper cover part that covers an upper end of the first air layer forming part and separates the first air layer from an external space, a lower cover part that covers a lower end of the second air layer forming part and separates the second air layer from the external space, and an intermediate separation part that is disposed between the first air layer forming part and the second air layer forming part and separates the first air layer and the second air layer from each other, wherein the first air layer forming part and the second air layer forming part are arranged so that the first air layer and the second air layer do not at least partially overlap each other, and the air layer forming part includes, based on 100 parts by weight of low-density polyethylene, linear low-density polyethylene, ethylene vinyl acetate, or one or more resins selected therefrom, 20 to 35 parts by weight of azodicarbonamide, benzenesulfonylhydrazide, hexamethylenetetramine, sodium hydrogen carbonate, or one or more foaming agents selected therefrom, and 0.5 to 1.5 parts by weight of dicumyl peroxide as a cross linking agent.

### [Advantageous Effects]

According to a flame retardant insulation module according to an embodiment, insulation performance is maximized, and flame retardancy is achieved even when a fire occurs.

The effect of the present invention is not limited to the above-described effects, and not-mentioned effects will be clearly understood by those skilled in the art to which the present invention pertains from the present specification and the accompanying drawings.

### [Description of Drawings]

FIG. 1 is a schematic exploded perspective view of an insulation module according to an embodiment of the present invention.
FIG. 2 is a schematic partial cross-sectional view of the insulation module according to the embodiment of the present invention.
FIGS. 3 to 5 are schematic partial cross-sectional views for describing flame retardancy of the insulation module according to the embodiment of the present invention.

### [Modes of the Invention]

Hereinafter, detailed embodiments of the present invention will be described in detail with reference to the accompanying drawings. However, the idea of the present invention is not limited to the presented embodiments, and those skilled in the art who understand the idea of the present invention may easily propose other regressive inventions or other embodiments included in the scope of the present invention through addition, change, deletion, and the like of other components within the same scope of the idea. However, these embodiments are also included in the scope of the present invention.

A flame retardant insulation module according to an embodiment of the present invention includes an air layer forming part that includes a first air layer forming part that forms a first air layer and a second air layer forming part that is disposed below the first air layer forming part and forms a second air layer, an upper cover part that covers an upper end of the first air layer forming part and separates the first air layer from an external space, a lower cover part that covers a lower end of the second air layer forming part and separates the second air layer from the external space, and an intermediate separation part that is disposed between the first air layer forming part and the second air layer forming part and separates the first air layer and the second air layer from each other, wherein the first air layer forming part and the second air layer forming part are arranged so that the first air layer and the second air layer do not at least partially overlap each other, and the air layer forming part includes, based on 100 parts by weight of low-density polyethylene, linear low-density polyethylene, ethylene vinyl acetate, or one or more resins selected therefrom, 20 to 35 parts by weight of azodicarbonamide, benzenesulfonylhydrazide, hexamethylenetetramine, sodium hydrogen carbonate, or one or more foaming agents selected therefrom, and 0.5 to 1.5 parts by weight of dicumyl peroxide as a cross linking agent.

The air layer forming part may further include 8 to 30 parts by weight of decabromodiphenylethane, decabromodiphenyloxide, tetrabromophthalicanhydride, antimony trioxide, magnesium hydroxide, aluminum hydroxide, or one or more halogen flame retardants selected therefrom, 30 to 120 parts by weight of melamine cyanurate, melamine polyphosphate, phosphazene, metal hydroxymethylphenyl phosphinate, or one or more non-halogen flame retardants selected therefrom, and 50 to 150 parts by weight of magnesium hydroxide, aluminum hydroxide, antimony trioxide, zinc borate, or one or more inorganic flame retardants selected therefrom.

The upper cover part may include a first insulation part that adheres to the upper end of the first air layer forming part to implement insulation, a second insulation part that is spaced apart from the first insulation part to form a separation space so as to implement insulation, and a state change part disposed on the separation space, and the state change part may be changed into a gas state at a predetermined temperature to increase the separation space at the predetermined temperature or higher so as to implement insulation.

When a pressure in the separation space reaches a predetermined pressure, the first insulation part may be broken earlier than the second insulation part to prevent breakage of the second insulation part, and thus guide a gas in the separation space to the first air layer.

When the first insulation part is broken and thus a pressure in a communication space in which the separation space and the first air layer communicate with each other reaches the predetermined pressure, the intermediate separation part may be broken earlier than the second insulation part to prevent the breakage of the second insulation part and thus guide a gas in the communication space to the second air layer.

Components having the same function within the same scope of the spirit illustrated in the drawings of each embodiment will be described using the same reference numerals.

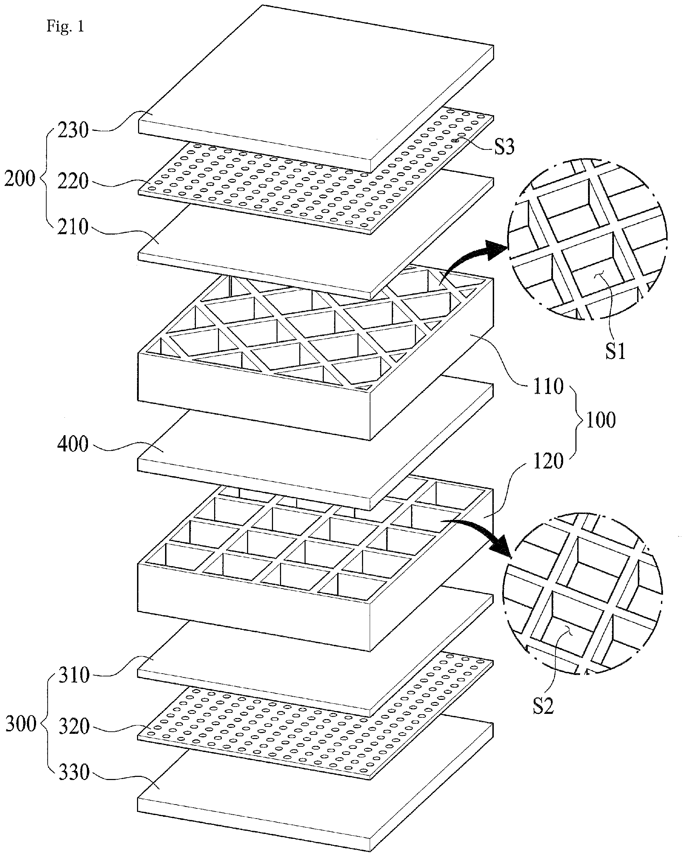

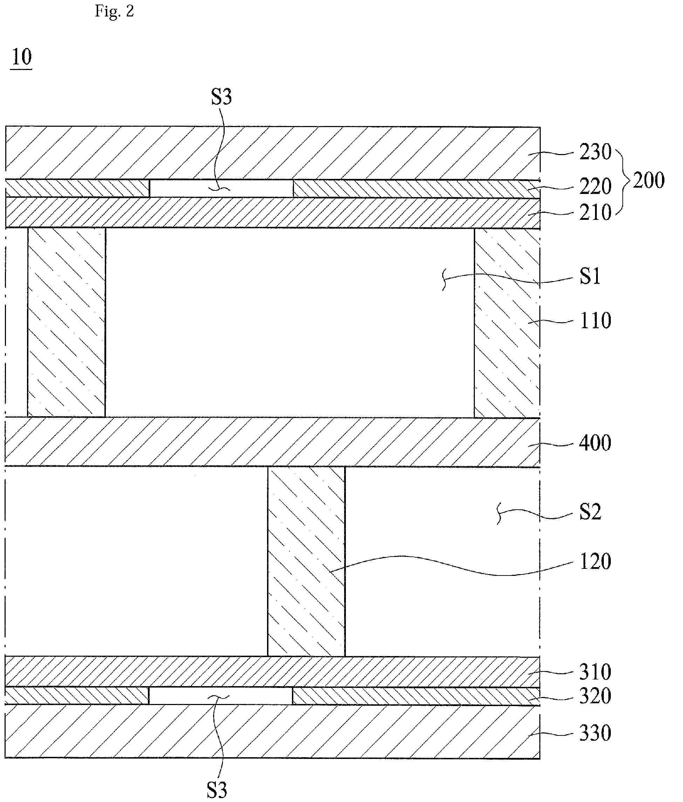

FIG. 1 is a schematic exploded perspective view of an insulation module according to an embodiment of the present invention, and FIG. 2 is a schematic partial cross-sectional view of the insulation module according to the embodiment of the present invention.

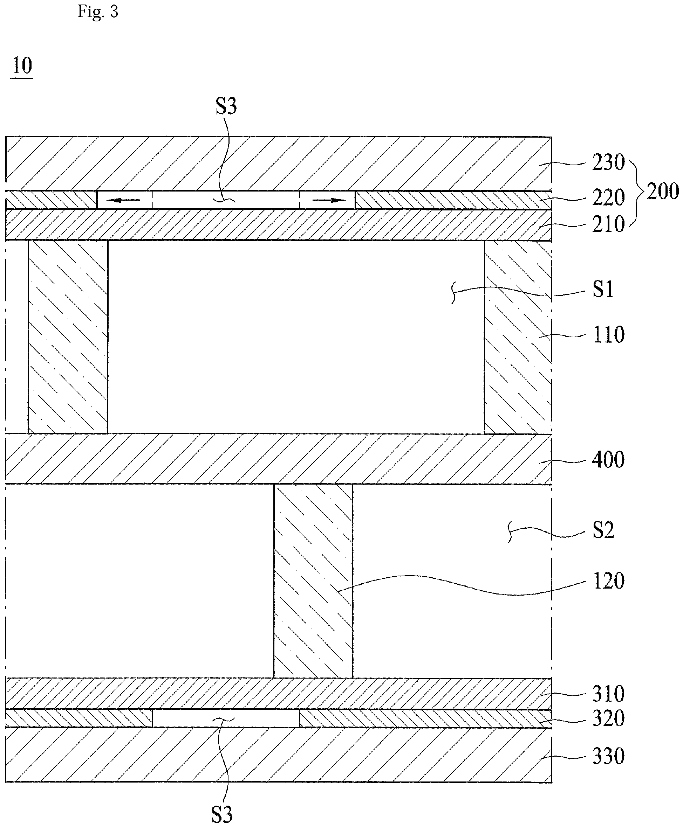

FIGS. 3 to 5 are schematic partial cross-sectional views for describing flame retardancy of the insulation module according to the embodiment of the present invention.

In the accompanying drawings, in order to more clearly express the technical spirit of the present invention, parts that are not related to the technical spirit of the present invention or that can be easily derived from those skilled in the art are simplified or omitted.

As illustrated in FIGS. 1 to 5, an insulation module 10 having flame retardancy according to the embodiment of the present invention may be installed on a wall, a fire door, or the like of a building to implement insulation.

As an example, the insulation module 10 may include an air layer forming part 100 including a first air layer forming part 110 that forms a first air layer S1 and a second air layer forming part 120 that is disposed below the first air layer forming part 110 and forms a second air layer S2.

The air layer forming part 100 may form the first air layer S1 and the second air layer S2 to minimize movement of heat.

Here, as an example, the first air layer forming part 110 and the second air layer forming part 120 may be arranged so that the first air layer S1 and the second air layer S2 do not at least partially overlap each other.

In more detail, as illustrated in FIGS. 2 to 5, the first air layer S1 and the second air layer S2 are not arranged side by side in a height direction but may be arranged alternately so as not to at least partially overlap each other in the height direction.

For example, the first air layer forming part 110 and the second air layer forming part 120 may entirely have a mesh shape to form the first air layer S1 and the second air layer S2, respectively.

Here, as an example, the insulation module 10 may further include an upper cover part 200 that covers an upper end of the first air layer forming part 110 to separate the first air layer S1 from an external space and a lower cover part 300 that covers a lower end of the second air layer forming part 120 to separate the second air layer S2 from the external space.

As an example, the upper cover part 200 and the lower cover part 300 cover an upper side and a lower side of the air layer forming part 100 so that the air layer forming part 100 may be protected from an external environment. Further, the movement of heat is restricted, and thus an insulation function may be implemented.

In some cases, the upper cover part 200 and/or the lower cover part 300 surrounds not only the upper side and the lower side of the air layer forming part 100 but also lateral sides of the air layer forming part 100 and thus may protect the air layer forming part 100 from the external environment.

Here, as an example, the insulation module 10 may include an intermediate separation part 400 that is disposed between the first air layer forming part 110 and the second air layer forming part 120 to separate the first air layer S1 and the second air layer S2 from each other.

As an example, the intermediate separation part 400 may be disposed between the first air layer S1 and the second air layer S2 so that the first air layer S1 and the second air layer S2 do not communicate with each other.

As a result, the movement of heat from the first air layer S1 to the second air layer S2 is restricted, and thus the insulation function may be maximized.

As an example, the upper cover part 200 may adhere to an upper side of the first air layer forming part 110, and the lower cover part 300 may adhere to a lower side of the second air layer forming part 120.

Further, as an example, the intermediate separation part 400 may adhere to a lower side of the first air layer forming part 110 and an upper side of the second air layer forming part 120.

For example, the upper cover part 200 or the lower cover part 300 may be installed in contact with a wall, a door, or the like.

Here, as an example, the air layer forming part 100 may include, based on 100 parts by weight of low-density polyethylene, linear low-density polyethylene, ethylene vinyl acetate, or one or more resins selected therefrom, 20 to 35 parts by weight of azodicarbonamide, benzenesulfonylhydrazide, hexamethylenetetramine, sodium hydrogen carbonate, or one or more foaming agents selected therefrom, and 0.5 to 1.5 parts by weight of dicumyl peroxide as a cross linking agent.

By adding the foaming agent to the resin, the weight of the air layer forming part 100 can be reduced.

Further, by adding the cross linking agent to the resin, the elastic modulus, the heat resistance, and the like of the air layer forming part 100 can be improved.

Here, as an example, the air layer forming part 100 may further include, based on 100 parts by weight of the resin, 8 to 30 parts by weight of decabromodiphenylethane, decabromodiphenyloxide, tetrabromophthalicanhydride, antimony trioxide, magnesium hydroxide, aluminum hydroxide, or one or more halogen flame retardants selected therefrom, 30 to 120 parts by weight of melamine cyanurate, melamine polyphosphate, phosphazene, metal hydroxymethylphenyl phosphinate, or one or more non-halogen flame retardants selected therefrom, and 50 to 150 parts by weight of magnesium hydroxide, aluminum hydroxide, antimony trioxide, zinc borate, or one or more inorganic flame retardants selected therefrom.

That is, the air layer forming part 100 may include a halogen flame retardant, the non-halogen flame retardant, or the inorganic flame retardant to maximize the flame retardant performance.

In some cases, one or more of the halogen flame retardant, the non-halogen flame retardant, and the inorganic flame retardant may be selectively included in the air layer forming part 100.

Hereinafter, referring to FIGS. 1 to 5, a structure in which the insulation module 10 has insulation properties and maximizes the flame retardancy performance will be described in detail.

As an example, the upper cover part 200 may include a first insulation part 210 that adheres to the upper end of the first air layer forming part 110 to implement insulation and a second insulation part 230 that is spaced apart from the first insulation part 210 to form a separation space S3 and to implement insulation.

That is, the upper cover part 200 may be formed not as a single configuration but as a plurality of layers.

As an example, the first insulation part 210 may be disposed to adhere to the upper end of the first air layer forming part 110, and the second insulation part 230 may be disposed above the first insulation part 210.

Here, the first insulation part 210 and the second insulation part 230 may be at least partially spaced from each other to form the separation space S3.

As a result, the movement of heat is restricted, and thus the insulation function can be maximized.

Here, as an example, the upper cover part 200 may further include a state change part 220 disposed on the separation space S3.

That is, the state change part 220 may be disposed between the first insulation part 210 and the second insulation part 230.

As an example, the state change part 220 may be changed into a gas state at a predetermined temperature to increase the separation space S3 at the predetermined temperature or higher so as to implement insulation.

In more detail, when a fire occurs on an upper side of the insulation module 10, the upper cover part 200 may receive heat generated by the fire.

In this case, as illustrated in FIG. 3, when the state change part 220 reaches the predetermined temperature due to the fire, before the first insulation part 210 and the second insulation part 230 are broken, the state change part 220 may be changed from a solid state and/or a liquid state into a gas state to increase the separation space S3.

That is, when the state change part 220 reaches the predetermined temperature, the first insulation part 210 and the second insulation part 230 are not broken, and the state change part 220 may be first changed into a gas state to increase the separation space S3.

That is, the first insulation part 210 and the second insulation part 230 have relatively higher flame retardancy and/or heat resistance than those of the state change part 220 and thus are not broken and changed into a gas state even when reaching the predetermined temperature. When reaching the predetermined temperature, the state change part 220 may be changed from a solid state and/or a liquid state on the separation space S3 into a gas state, thereby increasing the separation space S3.

As a result, transfer of heat from the upper side of the insulation module 10 to the air layer forming part 100 can be restricted due to the increase in the separation space S3.

The state change part 220 is disposed between the first insulation part 210 and the second insulation part 230 in a solid state at room temperature to resist an external force so as to increase durability and is changed into a gas state, when reaching the predetermined temperature due to the fire, to increase the separation space S3 so as to restrict the transfer of heat.

As an example, the state change part 220 may adhere to the first insulation part 210 and the second insulation part 230.

As an example, the state change part 220 may be made of a material that may be changed into a gas state at the predetermined temperature and may be made of, for example, resin and/or plastic.

Here, as an example, when the pressure in the separation space S3 reaches a predetermined pressure, the first insulation part 210 is broken earlier than the second insulation part 230 to prevent breakage of the second insulation part 230 and thus may guide the gas in the separation space S3 to the first air layer S1.

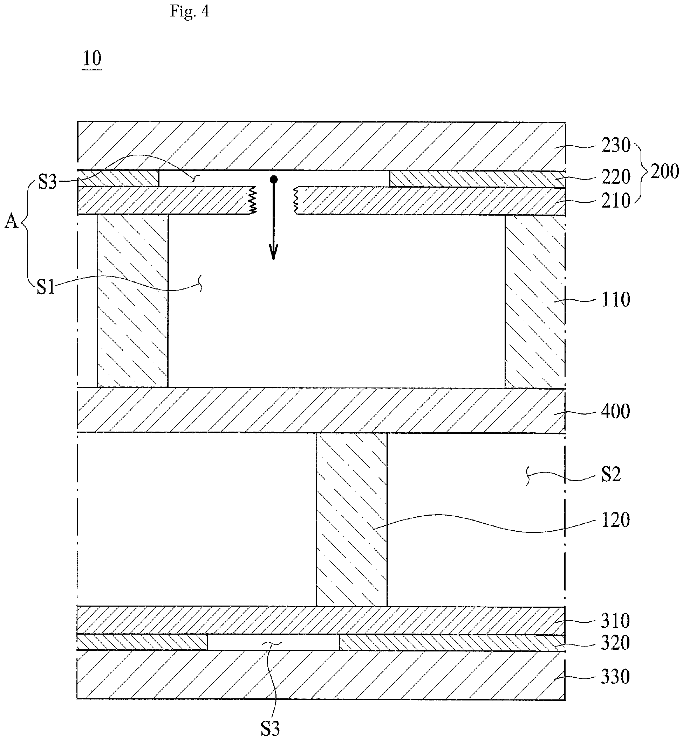

In more detail, as illustrated in FIG.4, the pressure in the separation space S3 may continuously increase due to the occurrence of a fire on the upper side of the insulation module 10.

In this case, the first insulation part 210 and the second insulation part 230 may be pressed by the pressure in the separation space S3.

Here, when the second insulation part 230 is broken by the pressure, the separation space S3 may be allowed to directly communicate with a space in which a fire occurs, and as a result, the state change part 220 and the first insulation part 210 may be directly affected by the fire.

To solve this, when the pressure in the separation space S3 reaches the predetermined pressure, the first insulation part 210 is broken earlier than the second insulation part 230 to guide the gas in the separation space S3 to the first air layer S1, thereby reducing the pressure in the separation space S3.

As a result, a time for the second insulation part 230 to be broken due to the pressure may be increased.

In a method in which the first insulation part 210 is broken relatively earlier than the second insulation part 230 under the predetermined pressure in the separation space S3, a material of the first insulation part 210 may be a material having relatively smaller resistance to pressing (which may be more easily broken) than a material of the second insulation part 230.

Alternatively, the materials of the first insulation part 210 and the second insulation part 230 are the same, but the thickness of the first insulation part 210 may be relatively smaller than the thickness of the second insulation part 230.

The first insulation part 210 and the second insulation part 230 may be a metal film and may be made of a material selected from silver, aluminum, and/or carbon.

Here, as an example, when the first insulation part 210 is broken and thus a pressure in a communication space in which the separation space S3 and the first air layer S1 communicate with each other reaches the predetermined pressure, the intermediate separation part 400 may be broken earlier than the second insulation part 230 to prevent the breakage of the second insulation part 230 and thus may guide the gas in the communication space to the second air layer S2.

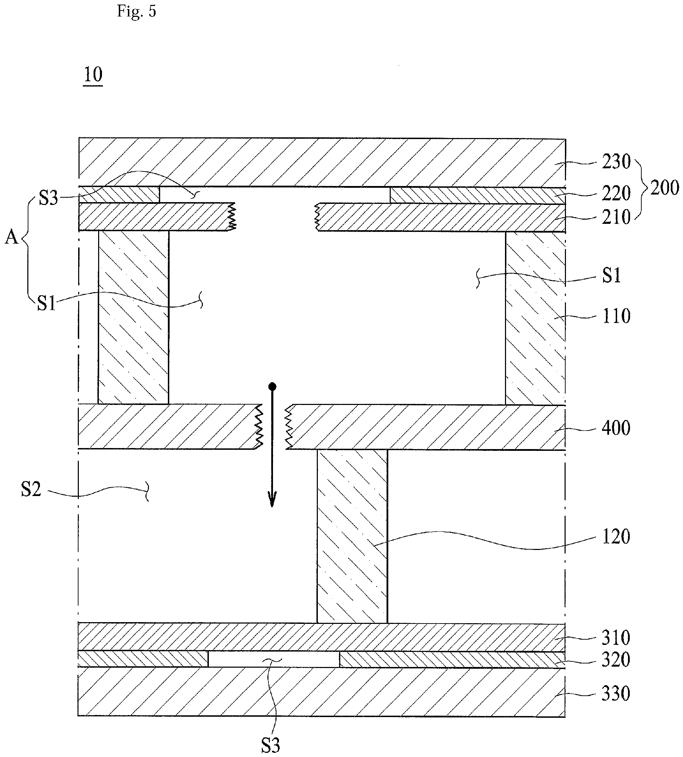

In more detail, as illustrated in FIG. 5, the pressure in the communication space may continuously increase due to the occurrence of a fire on the upper side of the insulation module 10.

Here, the communication space may be a space including the separation space S3 and the first air layer S1 in a state in which the separation space S3 and the first air layer S1 communicate with each other due to the breakage of the first insulation part 210.

In this case, the intermediate separation part 400 and the second insulation part 230 may be pressed due to the increasing pressure in the communication space.

Here, when the second insulation part 230 is broken due to the pressure in the communication space, the communication space may communicate with a space in which a fire occurs, and as a result, the state change part 220, the first insulation part 210, and the first air layer forming part 110 maybe directly affected by the fire.

To solve this, when the pressure in the communication space reaches the predetermined pressure, the intermediate separation part 400 may be broken relatively earlier than the second insulation part 230, guide the gas in the communication space to the second air layer S2, and thus reduce the pressure in the communication space.

As a result, a time for the second insulation part 230 to be broken due to the pressure may be increased.

In a method in which the intermediate separation part 400 is broken relatively earlier than the second insulation part 230 under a predetermined pressure in the communication space, a material of the intermediate separation part 400 may be a material having relatively smaller resistance to pressing (which may be more easily broken) than a material of the second insulation part 230.

Alternatively, the materials of the intermediate separation part 400 and the second insulation part 230 are the same, but the thickness of the intermediate separation part 400 may be relatively smaller than the thickness of the second insulation part 230.

The intermediate separation part 400 may be a metal film and may be made of a material selected from silver, aluminum, and/or carbon.

For example, when the first insulation part 210, the second insulation part 230, and the intermediate separation part 400 are made of the same material as an aluminum film, the thickness of the first insulation part 210 may be the largest, and the thickness of the second insulation part 230 may be the smallest.

As described above, the insulation module 10 can minimize the transfer of heat from the upper side to the lower side thereof when a fire occurs on the upper side thereof and can delay the breakage of the second insulation part 230 as much as possible to prevent the state change part 220 and the air layer forming part 100 from coming into direct contact with the fire, thereby maximizing a flame retardant function.

As an example, the lower cover part 300 may have a configuration (implementing the same function) corresponding to the upper cover part 200.

In more detail, the lower cover part 300 may include a third insulation part 310 corresponding to the first insulation part 210, a fourth insulation part 330 corresponding to the second insulation part 230, and a lower state change part 320 corresponding to the state change part 220.

As a result, even when a fire occurs in the lower side of the insulation module 10, the lower cover part 300 may implement the same function as the upper cover part 200.

Hereinabove, the configuration and feature of the present invention have been described based on the embodiments of the present invention, but the present invention is not limited thereto, and it is apparent to those skilled in the art to which the present invention pertains that various changes or modifications can be made within the scope of the present invention. Thus, it is noted that the changes or modifications belong to the appended claims.

## Claims

1. A flame retardant insulation module comprising:
an air layer forming part that includes a first air layer forming part that forms a first air layer and a second air layer forming part that is disposed below the first air layer forming part and forms a second air layer;
an upper cover part that covers an upper end of the first air layer forming part and separates the first air layer from an external space;
a lower cover part that covers a lower end of the second air layer forming part and separates the second air layer from the external space; and
an intermediate separation part that is disposed between the first air layer forming part and the second air layer forming part and separates the first air layer and the second air layer from each other,
wherein the first air layer forming part and the second air layer forming part are arranged so that the first air layer and the second air layer do not at least partially overlap each other, and
the air layer forming part includes, based on 100 parts by weight of low-density polyethylene, linear low-density polyethylene, ethylene vinyl acetate, or one or more resins selected therefrom, 20 to 35 parts by weight of azodicarbonamide, benzenesulfonylhydrazide, hexamethylenetetramine, sodium hydrogen carbonate, or one or more foaming agents selected therefrom, and 0.5 to 1.5 parts by weight of dicumyl peroxide as a cross linking agent.

2. The flame retardant insulation module of claim 1, wherein the air layer forming part further includes 8 to 30 parts by weight of decabromodiphenylethane, decabromodiphenyloxide, tetrabromophthalicanhydride, antimony trioxide, magnesium hydroxide, aluminum hydroxide, or one or more halogen flame retardants selected therefrom, 30 to 120 parts by weight of melamine cyanurate, melamine polyphosphate, phosphazene, metal hydroxymethylphenyl phosphinate, or one or more non-halogen flame retardants selected therefrom, and 50 to 150 parts by weight of magnesium hydroxide, aluminum hydroxide, antimony trioxide, zinc borate, or one or more inorganic flame retardants selected therefrom.

3. The flame retardant insulation module of claim 1, wherein the upper cover part includes:
a first insulation part that adheres to the upper end of the first air layer forming part to implement insulation;
a second insulation part that is spaced apart from the first insulation part to form a separation space so as to implement the insulation; and
a state change part disposed on the separation space, and
the state change part is changed into a gas state at a predetermined temperature to increase the separation space at the predetermined temperature or higher so as to implement the insulation.

4. The flame retardant insulation module of claim 3, wherein, when a pressure in the separation space reaches a predetermined pressure, the first insulation part is broken earlier than the second insulation part to prevent breakage of the second insulation part and thus guides a gas in the separation space to the first air layer.

5. The flame retardant insulation module of claim 4, wherein, when the first insulation part is broken and thus a pressure in a communication space in which the separation space and the first air layer communicate with each other reaches the predetermined pressure, the intermediate separation part is broken earlier than the second insulation part to prevent the breakage of the second insulation part and thus guides a gas in the communication space to the second air layer.
